(19) Europäisches Patentamt
European Patent Office
Office européen des brevets

(11) **EP 4 533 957 A1**

(12) **EUROPEAN PATENT APPLICATION**

(43) Date of publication:
**09.04.2025 Bulletin 2025/15**

(21) Application number: **23201447.2**

(22) Date of filing: **03.10.2023**

(51) International Patent Classification (IPC):
*A23F 3/06* (2006.01)      *A23F 3/14* (2006.01)
*A23F 3/34* (2006.01)      *A23L 33/105* (2016.01)
*A23F 3/08* (2006.01)

(52) Cooperative Patent Classification (CPC):
**A23F 3/06; A23F 3/08; A23F 3/14; A23F 3/34;
A23L 33/105**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ekaterra Research and Development
UK Limited
Sharnbrook, Bedfordshire MK44 1LQ (GB)**

(72) Inventor: **The designation of the inventor has not
yet been filed**

(74) Representative: **Mewburn Ellis LLP
Aurora Building
Counterslip
Bristol BS1 6BX (GB)**

(54) **A PROCESS FOR PRODUCING A TEA PRODUCT**

(57)      The present invention relates to a process for producing a tea product. More particularly the present invention relates to a process for producing an ambient / cold water infusible leaf tea product with a rich infusion colour. Specifically, the present invention provides a process for the preparation of a leaf tea product comprising the steps of hydrating green tea leaves with a moisture content of less than 20% by weight to a moisture content of at least 20% by weight, and contacting said hydrated green tea leaves with a base.

EP 4 533 957 A1

## Description

### Field of the invention

The present invention relates to a process for producing a tea product. More particularly the present invention relates to a process for producing an ambient / cold water infusible leaf tea product with a rich infusion colour.

### Background of the invention

Tea is one of the most popular beverages in the world. There are varieties of tea available in the market e.g., black tea, green tea, oolong tea, white tea, *etc.* Out of these, black tea is most prevalent. One hand, black tea can be consumed with or without milk as a hot beverage. On the other hand, black tea also can be consumed at room temperature or as a cold beverage. There are varied practices between the consumers of different part of the world.

Black tea is predominantly characterized by its rich red coloured infusion. One of the problems associated with black tea beverages prepared in cold water is that the tea infusion lacks colour. This is because tea solids which are responsible for rich red coloured tea infusions are soluble only at high temperature. Therefore, a reduction in the brewing temperature results in lower solubility of the solids that are responsible for colour generation.

There is prior art, which discloses cold water infusible tea products and their characteristics.

WO 00/47056 (Unilever, 2000) discloses leaf product which brews in cold water to produce an iced tea beverage with the colour and flavor of iced teas prepared by hot brewing methods. The product when brewed in water at about 15°C for about 5 minutes at a water to tea ratio of 100 water to 1 tea has a cold-water infusion Hunter L Value of about 25 to 45; a Hunter "a" value of about 24 to 34; a Hunter haze value of less than 40 and at least 0.15 % soluble tea solids.

US 4051264 (Thomas J. Lipton, Inc., 1977) discloses cold water extractable tea leaf prepared by treatment of fresh green tea with the enzyme tannase under anaerobic conditions. This prior art particularly discloses a process wherein fresh tea leaf is subjected to withering, followed by comminution and then tannase is added along with KOH. After this, the fermentation stage is done under covered condition (anaerobic).

Although few prior arts disclose improving the colour of cold-water extractable tea, we found that the resulting colour of the cold-water extractable tea may further be improved. In addition, use of enzymes, in particularly tannase, results in enhancement of the acidity of the tea product because of production of free gallic acid because of tannase treatment.

Tea is also a cheap product with a relatively low profit margin. For this reason, the processing of tea needs to be both cheap and easily implementable.

Therefore, there is a need to provide a cold-water infusible tea product that provides an infusion with enhanced red colour, but also at a low cost using cheap and readily available materials.

The present inventors have surprisingly found that a process comprising hydrating made green tea leaves in the presence of a base is able to provide a cold-water extractable tea product (e.g. a black tea-like product) with enhanced infusion colour. Furthermore, the present inventors also surprisingly found that the resulting tea product also provides enhanced colour in hot infusions too.

Treating teas with bases is generally known. However, treating tea with a base is generally used for distinctly different purposes, using different types and amounts of bases, and at different stages of the tea processing procedure to the process identified by the present inventors.

For example, CN107494806 (SANJIANG DONG AUTONOMOUS COUNTY BUYANG TEA IND CO LTD, 2017) discloses processing of tea leaves by treating it with sodium carbonate or baking soda after plucking, followed by washing it with clean water and then carrying out the regular tea processing. This is directed towards removal of pesticides from the tea leaves. This prior art completely silent about enhancement of colour of the tea product, and is focussed on using black tea leaves rather than green tea leaves.

Thus, the process of the present invention provides a novel solution to the problem of providing a cold-water infusible tea product, at low cost, that provides an infusion with enhanced colour (e.g. enhanced red colour).

### Summary of the invention

Accordingly, in a first aspect there is provided a process for the preparation of a leaf tea product comprising the steps of hydrating green tea leaves with a moisture content of less than 20% by weight to a moisture content of at least 20% by weight, and contacting said hydrated green tea leaves with a base.

In a second aspect there is provided a process for producing a tea product comprising the steps of;

　　a) providing green tea leaves with moisture content of less than 20% by weight;
　　b) hydrating the green tea leaves of step a) to a moisture content of at least 20% by weight;

c) contacting the hydrated green tea leaves of step b) with 0.1 to 10% by weight of a base;

d) incubating the green tea leaves of step c) at a temperature of between 10 °C to 80 °C for between 1 minute and 48 hours; and

e) drying the fermented tea leaves to obtain the tea product.

In a third aspect there is provided a tea product prepared according to the process of the invention described herein.

The inventors have surprisingly established that finished green tea when hydrated and treated with a specific amount of base, as per the process of the invention defined herein, is able to provide ambient (and cold) water tea infusions with the excellent infusion characteristics (e.g. colour and taste), and surprisingly infusion characteristics (e.g. colour and taste) akin to black tea infusions. Moreover, the ambient (and cold) water infusions prepared using the tea products prepared from the process of the invention surprisingly and beneficially have enhanced infusion properties (e.g. colour) compared to infusions prepared from tea products made by hydrating black tea starting materials and treating the hydrated black tea material with a base.

This ability to prepare tea products with excellent black-tea like infusions from cheaper green tea starting materials is both surprising and beneficial in the production of new tea products which are capable of infusion in ambient (and cold) water, and something which could not have been arrived at from the disclosures in the art.

The above aspects and other aspects, embodiments, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se*. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

The disclosure of the invention as found herein will be understood to cover all embodiments as found in the claims and as discussed hereinbelow.

Where a feature is disclosed with respect to a particular aspect of the invention (for example in relation to one specific process of the invention), such disclosure is also to be considered to apply to any other aspect of the invention (for example in relation to any other process of the invention) *mutatis mutandis.*

The present invention provides a process for the preparation of a leaf tea product comprising the steps of hydrating green tea leaves with a moisture content of less than 20% by weight to a moisture content of at least 20% by weight, and contacting said hydrated green tea leaves with a base.

It will be appreciated that the green tea leaves are a finished green tea leaf product, preferably the finished green tea leaf product has a moisture content of less than 20%, preferably less than 15%, more preferably less than 10%, still more preferably less than 5%, and most preferably less than 3%.

In certain embodiments, the finished green tea leaf product has a moisture content of between 0.5% and 5%, preferably between 0.5% and 4%, more preferably between 1% and 3%, and most preferably between 1.5% and 2.5%.

A finished green tea leaf product preferably means green tea leaves which have undergone the tea manufacturing process and are ready for consumption. One such process is the green tea manufacturing process. In the green tea manufacturing process fresh tea leaves first undergo a step of enzyme deactivation, most typically by steaming or pan frying the fresh tea leaves. An optional step of partially withering the tea leaves may be present before or after enzyme deactivation. After enzyme deactivation, the green tea leaves are optionally macerated, typically by use of a cut-tear-curl method or by Rotorvane.

Next, a drying step is performed to produce a finished green leaf tea product with less than 5% moisture content.

It will be appreciated that the green tea leaves may be made directly from fresh tea leaves from a tea plant or may be purchased as finished green tea leaves.

In certain embodiments, the green tea leaves have a total polyphenols content of between 10% and 40%, such as between 15% and 35%, or between 15 and 25%, or between 18 and 22%, based on the weight of the green tea leaves.

In some embodiments, the green tea leaves have a total catechin content of between 5% and 30%, such as between 2% and 25%, or between 5 and 15%, or between 7 and 10%, based on the weight of the green tea leaves.

In certain embodiments, the green tea leaves are Argentinean green tea leaves. That is the green tea leaves are finished green tea leaves prepared from fresh tea leaves of Argentinean origin.

The green tea leaves may have any suitable average (e.g. mean) particle size, such as between 5 $\mu$m and 3000 $\mu$m, or between 50 $\mu$m and 3000 $\mu$m, or between 100 $\mu$m and 2000 $\mu$m, or between 500 $\mu$m and 2000 $\mu$m.

In some embodiments, the green tea leaves have an average (e.g. mean) particle size of between 5 $\mu$m and 100 $\mu$m, or between 5 $\mu$m and 50 $\mu$m, or between 5 $\mu$m and 30 $\mu$m, or between 5 $\mu$m and 20 $\mu$m.

When the tea leaves are fresh tea leaves, they typically have a moisture content of greater than 40%, and more typically greater than 50%, even more typically greater than 60%, further typically greater than 65%, and still more typically greater than 70%.

The fresh tea leaf may be obtained from *Camellia sinensis var. sinensis* and/or *Camellia sinensis var. assamica.*

Thus, in certain embodiments, the green tea leaves with a moisture content of less than 20% by weight may be prepared according to the following process:

i. providing fresh tea leaves with moisture content of at least 50% by weight;
ii. contacting the fresh tea leaves with steam, pan frying the tea leaves, and/or drying the fresh tea leaves using a fluidised bed dryer or by air drying;
iii. optionally, subjecting the fresh tea leaves to a step of comminution; and
iv. drying the tea leaves to obtain the tea product.

In step ii), the fresh tea leaves are contacted with steam, pan fried and/or dried using a fluidised bed dryer or air dryer. These are well known steps in the art for deactivating enzymes that exist in the fresh tea leaves. Preferably, in step ii), the fresh tea leaves are contacted with steam. More preferably, in step ii), the fresh tea leaves are contacted with steam at a temperature of between 95 °C and 140 °C (e.g. between 100 °C and 130 °C) for between 20 seconds to 30 minutes.

In some embodiments, step ii) comprises pan frying the tea leaves a temperature of between 80 °C and 200 °C (e.g. between 80 °C and 150 °C) for between 15 seconds to 30 minutes.

In a preferred embodiment, step iii) is present.

In step iii), the fresh tea leaves are subjected to comminution. This step of size reduction is preferably carried out by crushing, tearing and curling (known in the art of tea processing as CTC). It may also be carried using other well-known methods for size reduction, such as Rotorvane, rolling the tea leaves (using, for example, Andrews automated rollers, orthodox rolling etc.), kneading and the like. It will be appreciated that one or more comminution steps (e.g. CTC steps) may be carried out. In this step the leaf breaks up and releases enzymes that exist in the leaf. The comminuted tea leaves also known as dhool.

In some embodiments, step iii) may comprise a step of subjecting the fresh tea leaves to centrifugation to help comminute and grade the fresh tea leaves.

In embodiments where step iii) is absent, the process may comprise a step of creating micropores having diameter in the range of 5 to 100 $\mu$m on the fresh tea leaves.

Preferably the micropores have a diameter ranging from 5 to 90 $\mu$m, more preferably 20 to 80 $\mu$m and most preferably 30 to 70 $\mu$m.

The micropores can preferably be created by using a technique selected from the group consisting of lasers, sand blasting, dry ice blasting, micropins, electroporation, and combinations of one or more thereof.

Preferably, the micropores are created using micropins.

The number of micropores is preferably in the range of 200 to 400 per $cm^2$ of tea leaf, more preferably 250 to 400 $cm^2$ of tea leaf per and most preferably 300 to 400 per $cm^2$ of tea leaf.

In some embodiments, there is an additional step of withering of fresh tea leaves before comminution to reduce the moisture content of the fresh tea leaves to less than 65% by weight.

Step iv) involves drying the fresh tea leaves to obtain the green tea leaves. During the drying step, the fresh tea leaves are preferably dried to a moisture content of less than 10% by total mass of the tea leaf, more preferably less than 5 % by total mass of the tea leaf, to obtain the leaf tea product. The drying preferably be performed at a temperature in the range of 80 to 160°C, more preferably 90 to 150°C, most preferably 100 to 130°C.

The drying step is preferably carried out by thermal drying, freeze drying, vacuum drying or using a fluidized bed dryer.

Preferably, the drying step is carried out using a fluidized bed dryer.

*Hydrating the green tea leaves (step b)*

In step b) of the process of the invention, the green tea leaves are contacted with water to achieve a moisture content of between 20% and 100% by weight.

Preferably, the green tea leaves are contacted with water to achieve a moisture content of between 25% and 100% by weight, more preferably between 30% and 100% by weight, still more preferably between 40% and 99% by weight, even more preferably between 55% and 95% by weight, yet more preferably between 60% and 90% by weight, even further preferably between 65% and 90% by weight, and most preferably between 70% and 85% by weight.

It will be appreciated that the water content mentioned above refers to the moisture content of the green tea leaves.

It will be appreciated that the water of step b) may be at any suitable temperature. In some embodiments, the green tea leaves are contacted with water at a temperature of between 5 °C and 90 °C. Preferably, the green tea leaves are contacted with water at a temperature of between 5 °C and 80 °C. More preferably, the green tea leaves are contacted with water at a temperature of between 5 °C and 70 °C. Still more preferably, the green tea leaves are contacted with water at a temperature of between 5 °C and 50 °C. Even more preferably, the green tea leaves are contacted with water at a temperature of between 10 °C and 40 °C. Yet more preferably, the green tea leaves are contacted with water at a temperature of between 15 °C and 35 °C. Most preferably, the green tea leaves are contacted with water at a temperature of between 18 °C and 30 °C (e.g. 22 °C to 26 °C).

The water added in step b) may have any suitable pH. In certain embodiments, the water added in step b) has a pH of between 5.5 and 8.5. Preferably, the water added in step b) has a pH of between 5.5 and 7.5. More preferably, the water added in step b) has a pH of between 5.8 and 7.2. Most preferably, the water added in step b) has a pH of between 6.0 and 6.6.

In certain embodiments, the steps of hydrating the green tea leaves (step b) and the step of contacting the hydrated green tea leaves with a base (step c) may conducted together. In such embodiments, it will be appreciated that the water used to hydrate the green tea leaves may suitably contain the one or more bases (as described herein). In such embodiments, the water added in step b) may have a pH of between 7 and 12, and preferably a pH of between 7 and 9, and more preferably a pH of between 7.5 and 9, and most preferably a pH of between 7.5 and 8.5.

It will be appreciated that one or more additives may be added to the water used in step b). A non-limiting list of possible additives include vitamins, nutrients, flavourings (including sugar and sweeteners), metals and minerals, bulking agents, binders, anti-caking agents (e.g. silicon dioxide), buffering agents, hydrolysing enzymes (e.g. pectinase, lipase, cellulase, hemicellulose, endo glucanase, cellobiase, tannase, amylase, beta glycosidase), soluble tea extracts (e.g. black or green tea extract), micronized tea (e.g. black or green tea with an average (mean) particle size of between 1 $\mu$m and 100 $\mu$m) and combinations thereof.

In certain embodiments, the one or more additives may be added to the green tea leaves before or after step b). In such instances, the skilled person will be able to determine suitable administration routes based on known methodology.

A non-limiting list of possible vitamins include vitamin C, vitamin D (e.g. vitamin D2 and vitamin D3), B vitamins (such as vitamin B6, vitamin B12, vitamin B2, vitamin B3, vitamin B9, vitamin B7 (Biotin) etc.) vitamin E, vitamin A, vitamin B1, vitamin K and folate.

A non-limiting list of possible flavourings include vanilla, fruit (e.g. strawberry, lemon, berry), ginger, cardamom, all spices, jasmine and tea essence (e.g. earl grey, black tea).

A non-limiting list of possible nutrients include metal and minerals (e.g. zinc, iron, calcium, sodium, magnesium) and essential fatty-acids (e.g. omega-3 and omega-6). Preferably, the one or more additional nutrients is selected from metals and minerals (e.g. zinc, iron, calcium, sodium), and most preferably iron and/or zinc.

A non-limiting list of possible bulking agents include starch, carboxymethyl cellulose and sugar (e.g. dextrose).

A non-limiting list of possible bulking agents include gum arabic, maltodextrin, modified starch (e.g. OSA starch) and xanthan gum.

A non-limiting list of suitable buffering agents include citrates, carbonates, bicarbonates, phosphates, borates, glycine and combinations thereof. In certain embodiments, the buffering agent is a basic form of the acid included in the composition of the invention. For example, when the acid is citric acid, the buffering agent may be a citrate (e.g. sodium or potassium citrate).

It will be appreciated that the above additional agents may be added in any suitable amount. Preferably, the one or more additional agents are each independently added in an amount of between 0.01 and 5 % by weight of the green tea leaves, preferably between 0.05 and 4 % by weight of the green tea leaves, more preferably between 0.1 and 3 % by weight of the green tea leaves, and most preferably between 0.5 and 2 % by weight of the green tea leaves.

The process of contacting green tea leaves with water includes but is not limited to, spraying, dipping, pouring, submerging etc. In certain embodiments, the green tea leaves are contacted with water by spraying. In other embodiments, the green tea leaves are contacted with water by pouring the water onto the green tea leaves.

Preferably, the contacting time is in the range from 1 minute to 48 hours, more preferably from 2 minutes to 24 hours, even more preferably from 2 minutes to 12 hours, still more preferably from 2 minutes to 5 hours, and most preferably from 2 minutes to 120 minutes (e.g. from 5 minutes to 30 minutes).

*Contacting with base (step c)*

In certain embodiments, the contacting time is in the range from 30 minutes to 3 hours, more preferably from 80 minutes to 3 hours, and most preferably from 80 minutes to 2 hours.

Preferably, the steps of contacting green tea leaves with 0.1 to 10% by weight of a base is conducted at a temperature of between 10 °C and 45 °C, more preferably at a temperature of between 15 °C and 40 °C, even more preferably at a temperature of between 20 °C and 35 °C, and most preferably at a temperature of between 20 °C and 30 °C (e.g. 25 °C).

The base used in the process of the present invention preferably has a pKb value greater than 0.2, more preferably greater than 0.4, even more preferably greater than 1, further preferably greater than 2, yet more preferably greater than 3, and even further preferably greater than 4.

In some embodiments, the base used in the process of the present invention has a pKb value of between 0.2 and 10, more preferably between 0.4 and 9.5, still more preferably between 2 and 9, and most preferably between 3 and 8.5.

In some embodiments, the base used in the process of the present invention has a pKb value of between 3 and 10, more preferably between 3.5 and 9, still more preferably between 4 and 9, yet more preferably between 5 and 9 and most preferably between 5.5 and 9 (e.g. 6 - 8.5).

In some embodiments, the base used in the process of the present invention has a pKb value of between 2 and 5, such as between 3 and 4.

It will be understood that pKb refers to a measure of the alkalinity of a base. The lower the pkb value, the stronger the base. pKb refers to the negative base-10 logarithm of the base dissociation constant (Kb). pKb values are well-known and widely cited in the art as a measure of the strength of a base.

It will also be appreciated that the pKb values referenced herein refer to pKb values measured at ambient conditions (e.g. 25 °C and 1 atmosphere).

In some embodiments, the base is selected from sodium carbonate, sodium bicarbonate, potassium carbonate, potassium bicarbonate, sodium hydroxide, potassium hydroxide and mixtures thereof.

In certain embodiments, the base is a carbonate or bicarbonate. Preferably, the base is selected from sodium carbonate, sodium bicarbonate, potassium carbonate, potassium bicarbonate, sodium hydroxide, potassium hydroxide and mixtures thereof. The most preferred base is potassium bicarbonate.

The amount of base is in the range from 0.1 to 10%, preferably 1 to 8%, more preferably 1 to 6%, still more preferably 1 to 5%, even more preferably 1 to 3%, and most preferably 1 to 2.5% (e.g. 1-2%) by weight.

In certain embodiments, the amount of base is in the range from 2 to 8% and suitably 3 to 7% by weight.

In some embodiments, the amount of base is in the range from 0.1 to 3%, suitably 0.5 to 2.5%, and most suitably 1 to 2% by weight.

It will be appreciated that the % by weight of base corresponds to the % based on the dry weight of the tea leaves (e.g. the dry weight of the green tea leaves).

Without wishing to be bound by theory, the addition of a base to the green tea leaves is believed to assist with the oxidisation of the catechins found in the green tea leaves to quinones by enzymes such as polyphenol oxidases (PPOs) and peroxidases (PDs) naturally found in the green tea leaves. It is then believed subsequent oxidation (mediated by the base) and polymerization results in the production of molecules such as theaflavins and thearubugins, which are compound that are rich in colour and compounds which are commonly attributed to the dark, red infusion colours achieved for black tea products.

In some embodiments, the process of the invention also includes a step of contacting the green tea leaves with 0.1 to 5% by weight of a hydrolysing enzyme (polysaccharide degrading enzyme).

It will be understood that the hydrolysing enzymes (also referred to as tannin / polysaccharide degrading enzymes) may be any enzyme capable of degrading polysaccharides and/or tannins such as pectin, cellulose, hemicellulose and other polyphenols found in the tea leaves. Non-limiting examples of such degrading enzymes include pectinases, cellulases, hemicellulases, xylanases, beta glucanse, cellobiase, endoglucanse, Tannase and beta-glucosidase.

Preferably, the hydrolysing enzyme (e.g. polysaccharide degrading enzyme) is a pectinase or a cellulase. Most preferably, the hydrolysing enzyme (e.g. polysaccharide degrading enzyme) is a pectinase.

In certain embodiments, the hydrolysing enzyme (e.g. polysaccharide degrading enzyme) is a pectinase (e.g. polygalacturonase) in combination with one or more other enzymes selected from cellulases, hemicellulases, xylanases and cellobiase, ednoglucanse and beta-glucosidase.

Examples of suitable pectinase enzymes include polygalacturonase, pectinmthyl esterase, pectin lyase and combinations thereof. Preferably, the pectinase is polygalacturonase.

It will be appreciated, that the tea leaves may be contacted with the hydrolysing enzyme (e.g. polysaccharide degrading enzyme) either before, after or in combination with the base, as described herein. Preferably, the tea leaves are contacted with the hydrolysing enzyme (e.g. polysaccharide degrading enzyme) before or in combination with the base.

Preferably, the amount of hydrolysing enzyme (e.g. polysaccharide degrading enzyme, such as pectinase) is in the range from 0.1 to 5%, more preferably 0.1 to 3%, even more preferably 0.1 to 2%, still more preferably 0.2 to 1.5%, yet more preferably 0.2 to 1%, and most preferably 0.3 to 0.7% by weight.

*Incubating the tea leaves (step d)*

The green tea leaves are incubated for at least 1 minute, preferably at least 2 minutes, more preferably at least 5 minutes, still more preferably at least 10 minutes, yet more preferably at least 20 minutes, and most preferably at least 30 minutes.

In certain preferred embodiments, the green tea leaves are incubated for at least 30 minutes, and preferably at least 40 minutes, and more preferably at least 50 minutes, and most preferably at least 60 minutes.

Thus, in step d) of the process of the invention, the green tea leaves of step c) are incubated for between 1 minute and 48 hours, preferably between 5 minutes and 24 hours, more preferably between 20 minutes and 12 hours, still more preferably between 30 minutes and 8 hours, yet more preferably between 40 minutes and 6 hours and most preferably between 40 minutes and 3 hours.

Thus, in some preferred embodiments, the green tea leaves of step c) are incubated for between 20 minutes and 5 hours, and preferably between 30 minutes and 4 hours, and more preferably between 40 minutes and 4 hours, and most preferably between 1 hour and 3 hours.

It will be appreciated that the step of incubating the green tea leaves of step c) may be conducted at any suitable temperature. In certain embodiments, the green tea leaves of step c) are incubated at a temperature of between 10 °C and 70 °C, and preferably at a temperature of between 15 °C and 60 °C, and more preferably at a temperature of between 20 °C and 50 °C, and still more preferably at a temperature of between 20 °C and 40 °C, and most preferably at a temperature of between 15 °C and 35 °C (e.g. 22 °C to 26 °C).

It will be appreciated that the step of incubating the green tea leaves may be conducted at any suitable pressure. Preferably, the step of incubating the green tea leaves is conducted at ambient pressure (1 atmosphere).

It will also be appreciated that after the step of incubating the green tea leaves but before the step of drying the green tea leaves one or more optional further steps may be included in the process of the invention.

A non-limiting list of possible further steps include contacting the green tea leaves with steam, pan frying the green tea leaves, subjecting the green tea leaves to comminution, subjecting the green tea leaves to a step of mechanical shear, contacting the green tea leaves with one or more enzymes, coating the green tea leaves with one or more metals, minerals or vitamins, coating the green tea leaves with other the green tea products (e.g. instant green tea powder or Matcha tea) of the same or different origin, and combinations thereof.

In certain embodiments, the process of the invention further includes a step of subjecting the green tea leaves to comminution, preferably after step d) but before step e). This step of size reduction is preferably carried out by crushing, tearing and curling (known in the art of tea processing as CTC). It may also be carried using other well-known methods for size reduction, such as Rotorvane and the like. It will be appreciated that one or more CTC steps may be carried out. In this step the leaf breaks up and releases enzymes that exist in the leaf. The comminuted tea leaves also known as dhool.

After comminution, the green tea leaves may have any suitable average (e.g. mean) particle size, such as between 5 $\mu$m and 3000 $\mu$m, or between 50 $\mu$m and 3000 $\mu$m, or between 100 $\mu$m and 2000 $\mu$m, or between 500 $\mu$m and 2000 $\mu$m. In some embodiments, the botanical material (e.g. green tea leaves) may have an average (e.g. mean) particle size of between 5 $\mu$m and 100 $\mu$m, or between 5 $\mu$m and 50 $\mu$m, or between 5 $\mu$m and 30 $\mu$m, or between 5 $\mu$m and 20 $\mu$m.

In certain embodiments, the process of the invention further includes a step of contacting the green tea leaves to steam, preferably after step d) but before step e).

Preferably, the green tea leaves are contacted with steam at a temperature of between 95 °C and 140 °C for between 1 minute and 30 minutes, more preferably at a temperature of between 100°C and 140 °C for between 1 minute and 15 minutes, and most preferably at a temperature of between 105 °C and 135 °C for between 1 minute and 5 minutes.

In some embodiments, after step d) and before step e) the green tea leaves are further subjected to a step of mechanical shear. It will be appreciated that mechanical shear refers to the action of mechanical strain or stress being applied to the botanical material.

The term 'shear' generally means the act of producing some strain in the structure of a substance/material. Shear as mentioned herein preferably means damaging the green tea leaves in a controlled way.

In the present invention, as mentioned above, the shear is produced by passing the green tea leaves through an instrument. This preferably done by using a mechanical device. Non-limiting examples of suitable mechanical devices are screw press, screw plates, plough shear mixer, screw tubes and the like.

The green tea leaves are preferably exposed to shear, preferably for between 30 seconds and 5 minutes and more preferably between 30 seconds and 3 minutes.

The shear rate for the above step is preferably in the range of 10000 /s to 15000/s.

The shear is the rate at which a material deforms at a given speed in a channel having a defined depth and diameter. For the purpose of the invention, where the green tea leaves are subjected to shear in a device with a shaft diameter D cm and with a channel depth of H cm of at N rpm, then the shear rate is:

$$\text{Shear Rate} = \frac{\pi * D * N}{H}$$

For this kind of equipment, there is a rotating shaft inside a channel through which the material is to be passed. The rotational motion of this shaft conveys the material from one end (inlet) of the instrument to the other end (outlet). During this conveyance, the material experiences shear against the wall of the channel and the shaft. When the shaft is preferably having screw like extensions, it is known as screw press. In the above equation 'D' is the diameter of the shaft and 'H' is the channel depth. Channel depth means the longitudinal distance from the shaft to the wall of the channel. Therefore, 'H+D' can be considered as the channel diameter.

For a screw press wherein the diameter is 12.7 cm with a channel depth of 0.1 cm and at 25 rpm, the shear rate as calculated using the above equation is approximately 10000 Is.

Preferably, pressure applied for the process is in the range of 0 to 10 bars, more preferably 0 to 5 bars, still more preferably 0 to 2 bar and most preferably 0 to 0.5 bar.

Preferably, the filling percentage of the green tea leaves in said instrument is also considered as a controlling parameter to obtain higher benefit of polyphenol delivery at the end cup. The words "filling percentage" preferably means the percentage of the instrument's available volume (i.e. capacity) that is filled by the dhool. Preferably the filling percentage of the green tea leaves in said instrument is in the range of 35% to 80%, more preferably 40% to 80%, furthermore preferably 50% to 80% and most preferably from 60% to 80%.

In certain embodiments, the after step d) and before step e) the green tea leaves are subjected to a step of mechanical shear using a screw press (e.g. a Vincent CP4 screw press) and applying a pressure of between 0 bar to 0.5 bar (e.g. 0 bar) and using a rotational speed of between 15 Hz and 40 Hz (e.g. 25 Hz).

It will be appreciated that in certain embodiments, the process of the invention may further comprise a step of contacting the green tea leaves with one or more enzymes and/or pH modifiers (e.g. after step d) and before step e)). The possible enzymes that may be used will be apparent to those in the art. Nonlimited examples of possible enzymes that may be used include tannase, pectinase, cellulase, hemicellulose, amylase, beta glycosidase, endo gluconase, cellobiase, and combinations thereof.

*Step of drying the green tea leaves (step e)*

After incubation, the process may also include a drying step. The conditions for the drying step are preferably those mentioned hereinabove.

The present invention also provides a tea product prepared using the process of the present invention, as described herein.

The present invention will now be demonstrated by way of non-limiting examples below. The examples are for illustration only and do not limit the scope of the invention in any manner.

**EXAMPLES**

<u>Materials</u> & <u>Experiments:</u>

Green tea of Argentinian origin sourced from Lipton R&I hub, New Jersy, USA were used for all experiments.

*Example 1*

Fresh tea leaves (200 g) from Argentina were withered for approximately 72 hours at a temperature of 25 °C. The moisture content of the tea product after withering was 65%. Then the tea leaves were then communited by rolling and Rotorvane to obtain a macerated dhool. The dhool was then fermented (exposed to air at 25 °C) for 120 minutes, before being dried at about 140 °C for about 20 minutes or until the moisture content of the macerated leaves was less than 5% by weight and then sifted into different grades.

*Example 2*

Fresh tea leaves (200 g) from Argentina were withered for approximately 72 hours at a temperature of 25 °C. The moisture content of the tea product after withering was 65%. Then the leaves were then communited by rolling and Rotorvane to obtain a macerated dhool. During communitation 6% (dry weight of leaf) potassium bicarbonate solution (4.2 g in 40 ml) was sprayed on the dhool and mixed thoroughly. The dhool was then fermented (exposed to air at 25 °C) for 120 minutes, before being dried at about 140 °C for about 20 minutes or until the moisture content of the macerated leaves was less than 5% by weight and then sifted into different grades.

*Example 3*

The black tea from Example 1 (100 g) was hydrated with 150 ml of a 6% dry weight of leaf. An aqueous solution of potassium bicarbonate (6 g in 180 ml water) to achieve a moisture content of 65%. The hydrated black tea was then allowed to incubate at 25 °C for about 120 minutes before being dried at about 140 °C for about 20 minutes or until the moisture content of the macerated leaves was less than 5% by weight.

*Example 4*

Green tea of Argentinian origin (100 g) with a moisture content of between 3-5% was hydrated with 180 ml of 3.2% w/v (6 g in 190 ml water, equivalent to 6% dry weight of leaf) solution of potassium bicarbonate to achieve a moisture content of 65%. The hydrated black tea was then allowed to incubate at 25 °C for about 120 minutes, before being dried at about 140 °C for about 20 minutes or until the moisture content of the macerated leaves was less than 5% by weight.

**Measurements:**

Brewing method:

*Cold Brew:* 2 g of the tea products outlined herein were added to 300 ml of deionised water at a temperature of approximately 15 °C and left to stand for 3 minutes with 3 times anticlockwise stirs at approximately each minute interval. Post brewing, the tea was filtered using fine mesh (150 um) tea filter and the infusion was used to measure the colour and ratio of hydrophilic / hydrophilic compounds delivered to the end cup.

Colour Measurements:

Colour (CIE L*a*b* values) was measured using a Hunter lab Ultrascan Vis(Serial No: UV VIS 1437, Hunterlab Associates Laboratories Inc. Virginia). A halogen cycle lamp was used as the light source. The illuminant used was D65 and the measurements were made at 10°- Observer angle. Measurements were made in TITRAN mode (transmittance mode) using quartz cuvette of 1 cm path length for L*a*b* measurement, 0.4 cm for absorbance reading using same instrument. Tea infusions as prepared above were filled up to the brim in the cuvette and placed in the instrument for colour measurement. The instrument was calibrated using a standard white tile (Hunterlab Diffuse/10°, mode-Total Transmittance, Port-1" and area- large) in accordance with the instructions provided in the instruction's manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

The higher the a* value the redder is the infusion. In the same way the higher the b* value the brighter is the infusion.

For a given cold brewed tea b* can be used as an indicator for quality and consumer preferred direction. The L*, b* and a* values measured across examples 1-4 are illustrated in Table 1a, Table 1b and Table 1C.

Hydrophobic to hydrophilic ratio measurements:

30 ml of cold brew samples prepared using above said method was mixed with 25 ml of ethyl acetate in a separating funnel. The mixture was taken in a shaker funnel (100 ml) and shaken for 30-40 seconds. The two layers were separated. The ethyl acetate layer was considered as hydrophobic layer and water layer was considered as hydrophilic layer. Absorbance of the two layers were measured using hunter lab UV vis colorimeter 0.4 mm quartz cuvette) at 440 nm. The ratio was calculated by dividing the absorbance(A) of the two layers. The results are presented in Table 4 below.

**Table 1**. Infusion colour (b* value) of the infusions prepared from Examples 1 - 4

| Examples | b* | Difference in b* between Example 2 and Example 1 | Difference in b* between Example 3 and Example 1 | Difference in b* between Example 4 and Example 1 |
|---|---|---|---|---|
| 1 | 18.0 | | | |
| 2 | 23.6 | 5.6 | | |
| 3 | 28.0 | | 10.0 | |
| 4 | 53.1 | | | 35.1 |

**Table 2**. Infusion colour (a* value) of the infusions prepared from Examples 1 - 4

| Examples | a* | Difference in a* between Example 2 and Example 1 | Difference in a* between Example 3 and Example 1 | Difference in a* between Example 4 and Example 1 |
|---|---|---|---|---|
| 1 | -2.0 | | | |
| 2 | -0.2 | 1.8 | | |
| 3 | 0.2 | | 2.2 | |
| 4 | 11.3 | | | 13.3 |

**Table 3**. Infusion colour (L* value) of the infusions prepared from Examples 1 - 4

| Examples | L* | Difference in L* between Example 2 and Example 1 | Difference in L* between Example 3 and Example 1 | Difference in L* between Example 4 and Example 1 |
|---|---|---|---|---|
| 1 | 90.0 | | | |
| 2 | 89.6 | -0.4 | | |
| 3 | 85.0 | | -5.0 | |
| 4 | **76.3** | | | -13.7 |

**Table 4**. Hydrophobic to hydrophilic ratio of the infusions prepared from Examples 1 - 4

| Examples | Absorbance @ 445nm Hydrophobic layer | Absorbance@ 445 nm Hydrophilic layer | Hydrophobic /Hydrophilic | Hydrophilic /Hydrophobic |
|---|---|---|---|---|
| 1 | 0.05 | 0.06 | 0.83 | 1.20 |
| 2 | 0.04 | 0.13 | 0.31 | 3.25 |
| 3 | 0.05 | 0.15 | 0.33 | 3.00 |
| 4 | 0.05 | 0.25 | 0.20 | 5.00 |

From the above tables it is evident that the tea products obtained using the process of the present invention on finished green tea leaves (Example 4) provide darker, redder coloured infusions with significantly higher amounts of hydrophilic compounds compared to tea products prepared using the same base treatment process on different sources of tea starting materials.

**Effect of Moisture Content**

*Example C*

Example C was green tea of Argentinian origin sourced from Lipton R&I hub, New Jersy, USA.

*Example 4a*

Green tea of Argentinian origin (50 g) with a moisture content of between 3-5% was hydrated with 90 ml of 3.3% w/v (3 g in 95 ml water, equivalent to 6% dry weight of leaf) solution of potassium bicarbonate to achieve a moisture content of 65%. The hydrated black tea was then allowed to incubate at 25 °C for about 120 minutes, before being dried at about 140 °C for about 20 minutes or until the moisture content of the green tea leaves was less than 5% by weight.

*Example 5*

Green tea of Argentinian origin (50 g) with a moisture content of between 3-5% was hydrated with 25 ml of 3.2% w/v (3 g in 25 ml water, equivalent to 6% dry weight of leaf) solution of potassium bicarbonate to achieve a moisture content of 32%. The hydrated black tea was then allowed to incubate at 25 °C for about 120 minutes, before being dried at about 140 °C for about 20 minutes or until the moisture content of the green tea leaves was less than 5% by weight.

*Example 6*

Green tea of Argentinian origin (50 g) with a moisture content of between 3-5% was hydrated with 25 ml of 3.2% w/v (3 g in 50 ml water, equivalent to 6% dry weight of leaf) solution of potassium bicarbonate to achieve a moisture content of 50%. The hydrated black tea was then allowed to incubate at 25 °C for about 120 minutes, before being dried at about 140 °C for about 20 minutes or until the moisture content of the green tea leaves was less than 5% by weight.

*Example 7*

Green tea of Argentinian origin (50 g) with a moisture content of between 3-5% was hydrated with 25 ml of 3.2% w/v (3 g in 195 ml water, equivalent to 6% dry weight of leaf) solution of potassium bicarbonate to achieve a moisture content of 80%. The hydrated black tea was then allowed to incubate at 25 °C for about 120 minutes, before being dried at about 140 °C for about 20 minutes or until the moisture content of the green tea leaves was less than 5% by weight.

**Table 5.** Infusion colour of infusions prepared from Examples 4a - 7

| Examples | % Moisture added | L* | a* | b* |
|----------|------------------|-----|-----|-----|
| C | | 92 | -2 | 15 |
| 4a | 65% | 72 | 8 | 48 |
| 5 | 33% | 82 | 3 | 36 |
| 6 | 50% | 78 | 6 | 41 |
| 7 | 80% | 79 | 0 | 36 |

**Effect of Water Temperature for Hydration Step**

*Example 8*

Green tea of Argentinian origin (50 g) with a moisture content of between 3-5% was hydrated with 25 ml of 3.2% w/v (3 g in 90 ml water at 25 °C, equivalent to 6% dry weight of leaf) solution of potassium bicarbonate to achieve a moisture content of 80%. The hydrated black tea was then allowed to incubate at 25 °C for about 120 minutes, before being dried at about 140 °C for about 20 minutes or until the moisture content of the green tea leaves was less than 5% by weight.

*Example 9*

Green tea of Argentinian origin (50 g) with a moisture content of between 3-5% was hydrated with 25 ml of 3.2% w/v (3 g in 90 ml water at 10 °C, equivalent to 6% dry weight of leaf) solution of potassium bicarbonate to achieve a moisture content of 80%. The hydrated black tea was then allowed to incubate at 25 °C for about 120 minutes, before being dried at about 140 °C for about 20 minutes or until the moisture content of the green tea leaves was less than 5% by weight.

*Example 10*

Green tea of Argentinian origin (50 g) with a moisture content of between 3-5% was hydrated with 25 ml of 3.2% w/v (3 g in 90 ml water at 75 °C, equivalent to 6% dry weight of leaf) solution of potassium bicarbonate to achieve a moisture content of 80%. The hydrated black tea was then allowed to incubate at 25 °C for about 120 minutes, before being dried at about 140 °C for about 20 minutes or until the moisture content of the green tea leaves was less than 5% by weight.

**Table 6.** Infusion colour of infusions prepared from Examples 8 to 10

| Examples | Temperature of water (°C) | L* | a* | b* |
|---|---|---|---|---|
| C | | 92 | -2 | 15 |
| 8 | 25 °C | 72 | 8 | 48 |
| 9 | 10 °C | 76 | 7 | 44 |
| 10 | 75 °C | 74 | 8 | 48 |

**Effect of Incubation Temperature**

*Example 11*

Green tea of Argentinian origin (50 g) with a moisture content of between 3-5% was hydrated with 25 ml of 3.2% w/v (3 g in 90 ml water at 25 °C, equivalent to 6% dry weight of leaf) solution of potassium bicarbonate to achieve a moisture content of 80%. The hydrated black tea was then allowed to incubate at 8 °C for about 120 minutes, before being dried at about 140 °C for about 20 minutes or until the moisture content of the green tea leaves was less than 5% by weight.

*Example 12*

Green tea of Argentinian origin (50 g) with a moisture content of between 3-5% was hydrated with 25 ml of 3.2% w/v (3 g in 90 ml water at 25 °C, equivalent to 6% dry weight of leaf) solution of potassium bicarbonate to achieve a moisture content of 80%. The hydrated black tea was then allowed to incubate at 80 °C for about 120 minutes, before being dried at about 140 °C for about 20 minutes or until the moisture content of the green tea leaves was less than 5% by weight.

**Table 8**. Infusion colour of infusions prepared from Examples 4a, 11 and 12

| Examples | Incubation Temperature (°C) | L* | a* | b* |
|---|---|---|---|---|
| C | | 92 | -2 | 15 |
| 4a | 25 °C | 72 | 8 | 48 |
| 11 | 8 °C | 77 | 3 | 38 |
| 12 | 80 °C | 85 | 1 | 32 |

**Claims**

1. A process for producing a tea product comprising the steps of hydrating green tea leaves with a moisture content of less than 20% by weight to a moisture content of at least 20% by weight and contacting said hydrated green tea leaves with 0.1 to 10% by weight of a base.

2. A process according to claim 1, wherein the process comprises the steps of:

a) providing green tea leaves with moisture content of less than 20% by weight;

b) hydrating the green tea leaves of step a) to a moisture content of at least 20% by weight;

c) contacting the hydrated green tea leaves of step b) with 0.1 to 10% by weight of a base;

d) incubating the green tea leaves of step c) at a temperature of between 10 °C to 80 °C for about 1 minute to 48 hours; and

e) drying the fermented tea leaves to obtain the tea product.

3. A process as claimed in claim 1 or claim 2, wherein the green tea leaves of step a) have a moisture content of less than 5% by weight.

4. A process as claimed in any one of claims 1 to 3, wherein the green tea leaves are hydrated to a moisture content of at least 30% by weight, and preferably at least 65% by weight.

5. A process as claimed in any one of claims 1 to 4, wherein the green tea leaves are macerated tea leaves.

6. A process as claimed in any one of the preceding claims, wherein the green tea leaves are Argentinean green tea leaves.

7. A process as claimed in any one of the preceding claims, wherein the pKb value of the base is between 0.2 and 10, and preferably is between 3.5 and 9, and most preferably is between 5 and 9.

8. A process as claimed in any one of claims 1 to 6, wherein the base is selected from sodium carbonate, sodium bicarbonate, potassium carbonate, potassium bicarbonate, sodium hydroxide, potassium hydroxide and mixtures thereof, and preferably is selected from sodium carbonate, sodium bicarbonate, potassium carbonate, potassium bicarbonate, and mixtures thereof.

9. A process as claimed in any one of the preceding claims, wherein the green tea leaves are further contacted with a hydrolysing enzyme (e.g. pectinase, tannase, amylase, endo glucanase, cellobiase, beta glycosidase etc) before, after or in combination with the base.

10. A tea product prepared according to the process as claimed in any one of claims 1 to 9.

**EP 4 533 957 A1**

Europäisches
Patentamt

European
Patent Office

Office européen
des brevets

# EUROPEAN SEARCH REPORT

Application Number

EP 23 20 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 546 508 A (UNILEVER LTD) 23 May 1979 (1979-05-23) * claim 1; example 1 * ----- | 1-10 | INV. A23F3/06 A23F3/14 A23F3/34 A23L33/105 A23F3/08 |
| X | US 2008/118602 A1 (NARAYANAN VENKATRAJ VENKATRAO [IN] ET AL) 22 May 2008 (2008-05-22) * comparative example A; examples 1,2; tables 1,2 * ----- | 1-10 | |
| E | EP 4 252 539 A1 (EKATERRA RES AND DEVELOPMENT UK LIMITED [GB]) 4 October 2023 (2023-10-04) * the whole document * ----- | 10 | |
| | | | TECHNICAL FIELDS SEARCHED (IPC) |
| | | | A23F A23L |

The present search report has been drawn up for all claims

| Place of search | Date of completion of the search | Examiner |
|---|---|---|
| The Hague | 22 February 2024 | van Klompenburg, Wim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 20 1447**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-02-2024**

| Patent document cited in search report | | Publication date | Patent family member(s) | | Publication date |
|---|---|---|---|---|---|
| GB 1546508 | A | 23-05-1979 | AU | 501876 B2 | 05-07-1979 |
| | | | CA | 1087446 A | 14-10-1980 |
| | | | CH | 622410 A5 | 15-04-1981 |
| | | | DE | 2610533 A1 | 07-10-1976 |
| | | | GB | 1546508 A | 23-05-1979 |
| | | | IN | 144499 B | 13-05-1978 |
| | | | JP | S51115999 A | 13-10-1976 |
| US 2008118602 | A1 | 22-05-2008 | AT | E386442 T1 | 15-03-2008 |
| | | | AU | 2004313303 A1 | 28-07-2005 |
| | | | CA | 2552884 A1 | 28-07-2005 |
| | | | DE | 602004011991 T2 | 19-02-2009 |
| | | | EP | 1703800 A1 | 27-09-2006 |
| | | | JP | 4486094 B2 | 23-06-2010 |
| | | | JP | 2007517510 A | 05-07-2007 |
| | | | PL | 1703800 T3 | 31-07-2008 |
| | | | US | 2008118602 A1 | 22-05-2008 |
| | | | WO | 2005067727 A1 | 28-07-2005 |
| EP 4252539 | A1 | 04-10-2023 | EP | 4252539 A1 | 04-10-2023 |
| | | | WO | 2023187034 A1 | 05-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0047056 A, Unilever
- US 4051264 A, Thomas J. Lipton, Inc.

- CN 107494806, SANJIANG DONG AUTONOMOUS COUNTY BUYANG TEA IND CO LTD